# EUROPÄISCHE PATENTSCHRIFT

(11) **EP 3 527 357 B1**
(45) Veröffentlichungstag und Bekanntmachung des Hinweises auf die Patenterteilung: **09.06.2021**
(21) Anmeldenummer: 18157522.6
(22) Anmeldetag: 20.02.2018
(51) Int. Cl.: B29C 70/00, B29C 44/00, B29C 70/86

(54) **KERN UND VERFAHREN ZUR HERSTELLUNG UND WEITERVERARBEITUNG EINES SOLCHEN**
CORE AND A METHOD FOR MANUFACTURING AND SUBSEQUENT TREATMENT OF SAME
NOYAU ET PROCÉDÉ DE FABRICATION ET DE TRAITEMENT ULTÉRIEUR D'UN TEL NOYAU

(43) Veröffentlichungstag der Anmeldung: 21.08.2019
(73) Patentinhaber: Maucher Formenbau GmbH & Co. KG, 88074 Meckenbeuren (DE)
(72) Erfinder: Strittmatter, Peter, 88046 Friedrichshafen (DE)
(74) Vertreter: Engelhardt, Volker

(56) Entgegenhaltungen:
- EP-A1- 2 524 794
- EP-A1- 2 942 184
- FR-A1- 2 861 012
- GB-A- 2 153 408
- US-A- 5 085 814
- US-A1- 2007 042 828
- US-A1- 2008 220 219

## Beschreibung

Die Erfindung bezieht sich auf ein Gebilde nach dem Oberbegriff des Patentanspruches 1 sowie auf ein Verfahren zur Herstellung eines solchen Gebildes.

Aus den Druckschriften EP 3 216 581 A1, DE 10 2008 032730 A1 sowie aus EP 1 097 794 A1 sind Flächengebilde in Sandwich-Leichtbau-Ausführung bekannt geworden, die durch Umformen oder Umziehen in ein dreidimensionales Gebilde weiterverarbeitet sind, das in einer Vielzahl von unterschiedlichen Anwendungen eingesetzt werden kann. Der Kern oder Tragschicht eines solchen Gebildes besteht aus einer Vielzahl von miteinander verschmolzenen Volumenpartikel aus den Werkstoffen expandierbares Polypropylen (EPP), expandierende Polystyrol (EPS) oder aus einem expandierenden Polyethylen (EPE). Üblicherweise werden solche Werkstoffe in einem quader- förmigen Formwerkzeug verarbeitet, derart, dass die Volumenpartikel erhitzt oder mittels Heißwasserdampf miteinander verschmolzen sind.

Auch aus den Offenbarungen nach EP 2 524 794 A1, US 2007/0042828 A1, die den Oberbegriff des Anspruchs 1 offenbart, oder US 2008/0220219 A1 sind vereinzelte Bauteile zu entnehmen, die Hinterschneidungen und entsprechend ausgestaltete Aufnahmeöffnungen aufweisen, um benachbarte Kerne miteinander zu verbinden. Dabei sollen zum einen die derart miteinander verbundenen Kerne zu Rotorblättern verbunden und mittels Laminat oder sonstigen Deckschichten dauerhaft fixiert sein oder zum anderen sollen diese Kerne als Bodenabdeckungsbeläge für Kinderzimmer dienen, um den eingebauten Boden, beispielsweise Fliesen, Parkettdielen oder dergleichen, vor Verschmutzungen bzw. Beschädigungen beim Spielen von Kindern zu schützen.

Nachhaltiger Weise wird aus einem solchen Quaderblock anschließend ein plattenförmiger Kern oder Trägerschicht herausgeschnitten, die eine bestimmte Außenabmessung aufweist, und zwar in Abhängigkeit von der späteren Größe des herzustellenden Gebildes.

Aufgrund der begrenzten räumlichen Ausdehnungsmöglichkeiten eines solchen Quaderblockes ist es technisch nicht möglich, eine beliebige geometrische Kernstruktur bereitzustellen. Lediglich die ursprüngliche Größe des Kernes kann durch Abschneiden bestimmter Bereiche verkleinert sein. Folglich können solche Kerne als Trägerschicht ausschließlich in einer begrenzten geometrischen Abmessung zur Verfügung gestellt sein.

Es ist daher Aufgabe der Erfindung, den Kern der vorgenannten Gattung derart auszugestalten, dass dieser mit anderen identisch ausgestalteten Kerne vor der Weiterverarbeitung der Kerne fest verbunden ist, um eine endlose Reihe von solchen Kernen und/oder beliebigen Ausdehnungsmöglichkeiten an unterschiedlichen Positionen der Kerne bereitzustellen. Darüber hinaus soll ein Verfahren der eingangsgenannten Gattung derart weitergebildet werden, dass mithilfe des erfindungsgemäßen Verfahrens solche Kerne mit den vorgenannten Eigenschaften und technischen Funktionen bereitgestellt sind. Ferner sollen die miteinander verbundenen Kerne vor der eigentlichen weiteren Beschichtung mit einer Deckschicht fest miteinander fixiert sein, um ein ungewünschtes Auseinanderfallen oder Lösen der benachbarten Kerne zu verhindern.

Zudem sollen Kerne mit unterschiedlichen Eigenschaften kombinierbar sein; beispielsweise können Kerne mit einer unterschiedlichen Eigenschaft oder Werkstoffen aneinander gekoppelt sein.

Diese Aufgaben sind erfindungsgemäß durch die Merkmale des kennzeichnenden Teils von Patentanspruch 1 sowie von Patentanspruch 5 gelöst.

Weitere vorteilhafte Weiterbildungen der Erfindung ergeben sich aus den Unteransprüchen.

Dadurch, dass vor Beginn des Weiterverarbeitungsprozesses an einer oder mehreren der Stirnseiten des Kerns eine oder mehrere Hinterschneidungen in Form von geometrischen Strukturen angeformt oder vorgesehen ist oder sind und dass die jeweilige Hinterschneidung des ersten Kerns mit einer Hinterschneidung eines zweiten Kerns derart korrespondieren oder ineinander greifen, derart, dass die beiden Kerne in x- und y-Richtung einer in der Ebene des Kerns verlaufenden Koordinationssystems formschlüssig arretiert sind, entsteht eine beliebige gestaltbare Ausdehnung von Kernen, wodurch die geometrische Abmessung solcher Reihen von Kernen an die spätere Ausdehnung des Gebildes exakt anpassbar bzw. vorgebbar ist. Da die Hinterschneidungen an allen vier Stirnseiten der Kerne vorhanden sind und mit den Hinterschneidungen von anderen Kernen übereinstimmen, können die jeweiligen Hinterschneidungen von zwei benachbarten Kernen formschlüssig ineinandergreifen, so dass zwei benachbarte Kerne zumindest in x-und y-Richtung eines in der Kernebene verlaufenden Koordinatensystems fest miteinander verbunden sind. Dies führt dazu, dass die Kerne als Endlosband und/oder in einer beliebigen räumlichen Ausdehnung in Abhängigkeit von der späteren herzustellenden Ausdehnung des Gebildes angeordnet und miteinander befestigt werden können.

Darüber hinaus können die Kerne zwar identische Hinterscheidungen aufweisen, jedoch aus unterschiedlichen Werkstoffen und/oder aus einer anderen Anzahl von Volumenpartikel aufgebaut sein. Dies ermöglicht somit, dass Kerne mit unterschiedlichen Eigenschaften hinsichtlich Formstabilität, Eigengewicht bzw. Festigkeit miteinander beliebig kombiniert werden können.

Nach der Verbindung der Kerne oder nach der Fertigstellung des Gebildes können die möglicherweise überstehenden ganzseitigen Hinterschneidungen abgeschnitten werden, so dass eine Stirnseite entsteht.

In den Zeichnungen ist ein Kern und die Herstellung sowie die Verbindung solcher Kerne miteinander dargestellt, die nachfolgend näher beschrieben sind. Im Einzelnen zeigt:

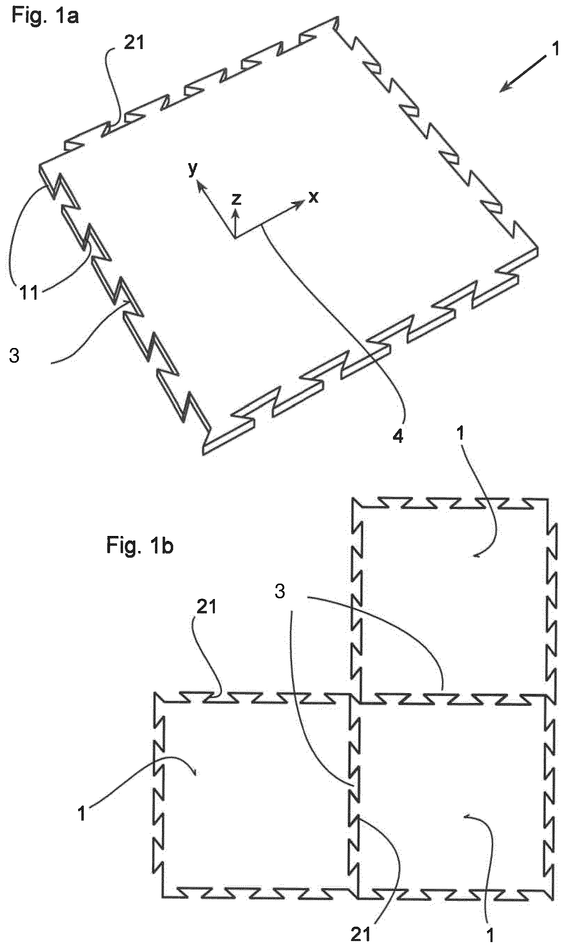

- Figur 1a: einen gefertigten Kern, der plattenförmig ausgestaltet ist und an dessen vier Seitenrändern eine Vielzahl von schwalbenschwanzförmigen ausgestalteten Hinterschneidungen angeformt sind,
- Figur 1 b: drei Kerne gemäß Figur 1a, die über die Hinterschneidungen in x-und y-Richtung eines in der Kernebene verlaufenden Koordinatensystems formschlüssig miteinander verbunden sind,
- Figur 2: ein Herstellungsverfahren für die Fertigung eines Kernes gemäß Figur 1a,
- Figur 3a: ein T-förmiges Profil für die Hinterschneidungen an den Seitenrändern des Kernes gemäß Figur 1 a,
- Figur 3b: ein L-förmiges Profil für die Hinterschneidungen an den Stirnseiten des Kernes gemäß Figur 1a,
- Figur 3c: ein Halbkugelkopf-förmiges Profil für die Hinterschneidungen an den Seitenrändern des Kernes gemäß Figur 1a und
- Figur 4: die Kerne gemäß Figur 1b in einem Weiterverarbeitungsprozess in einer Umformermaschine mit Formwerkzeugen.

In Figur 1 ist ein Kern 1 abgebildet, an dessen vier Stirnseiten 3 eine Vielzahl von schwalbenschwanzförmigen Profilen 21 zur Bildung von Hinterschneidungen 11 angeformt sind. Die Hinterschneidungen 11 dienen dazu, dass zwei benachbarte Kerne 1 mittels den Hinterschneidungen 11 in x-und y-Richtung eines in der Kernebene verlaufenden Koordinatensystems 4 arretiert sind, da die jeweiligen Hinterschneidungen 11 ineinandergreifen. In t-Richtung sind die Kerne somit gemäß der beispielhaften Anordnung in Figur 1b lösbar voneinander.

Folglich können eine Vielzahl von Kernen 1 miteinander über die Hinterschneidungen 11 lageorientiert gekoppelt sein. Dadurch kann die Außenkontur der derart miteinander verbundenen Kerne 1 beliebig lang und beliebig breit gestaltet werden.

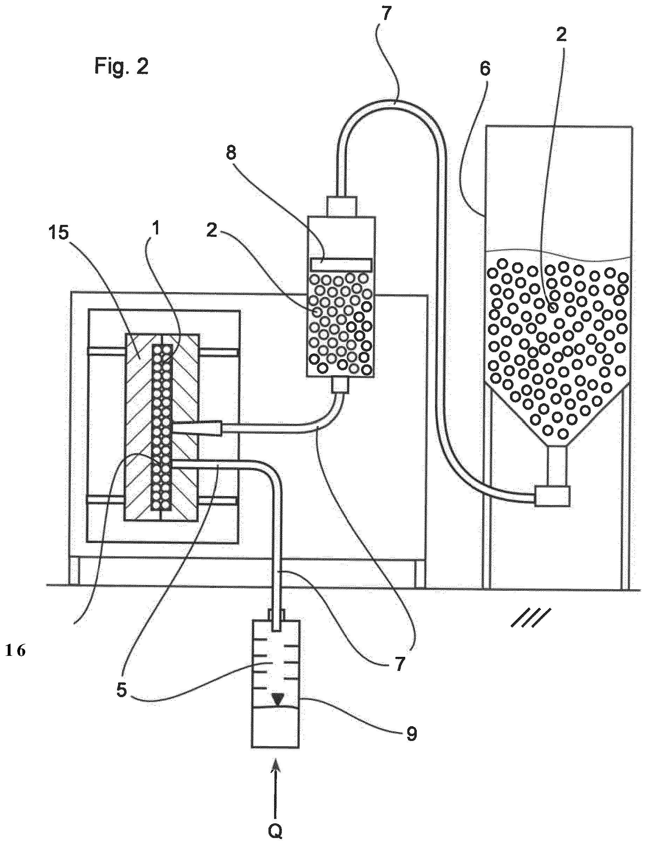

In Figur 2 ist gezeigt, wie die Kerne 1 gemäß Figur 1a hergestellt werden. In einem Vorratsbehälter 6 sind eine Vielzahl von Volumenpartikel 2 gelagert, die über einen Schlauch 7 in eine Dosiereinrichtung 8 eingefüllt sind. Mittels der Dosiereinrichtung 8 wird eine vorgebbare Anzahl von Volumenpartikel 2 über einen weiteren Schlauch 7 in ein Herstellungswerkzeug 15 eingefüllt, das einen Zwischenraum 16 aufweist, indem demnach die Volumenpartikel 2 verteilt sind.

Um die vereinzelten Volumenpartikel 2 miteinander zu verbinden, ist es erforderlich diese zu erwärmen. Dies erfolgt beispielsweise mittels einer Erhitzungs- oder Heißwasserdampferzeugungseinrichtung 9. Der Heißwasserdampf 5 gelangt über einen Schlauch 7 in den Zwischenraum 16 des Herstellungswerkzeuges 15. Aufgrund der Temperaturerhöhung in dem Zwischenraum 16 und den vorhandenen Wasserpartikeln des Heißwasserdampfs 5 vergrößert sich der Durchmesser der dort eingefügten Volumenpartikel 2 und deren Oberfläche schmilzt. Dadurch gelangen die Volumenpartikel 2 zunächst in sämtliche vorhandenen Bereiche des Zwischenraumes 16 und kleben während des Abkühlvorganges aneinander fest.

Zudem weist der Zwischenraum 16 an den vier umlaufenden Stirnseiten ein schwalbenschwanzförmiges Profil 21 auf, so dass die in den Figuren 1a und 1b dargestellte Hinterschneidungen 11 entstehen und unmittelbar an dem jeweiligen Kern 1 angeformt sind. Da die Herstellungswerkzeuge 15 eine beliebige geometrische Größe einnehmen können, ist es möglich, die Kerngröße entsprechend variabel zu gestalten. Nach dem Abkühlen können die Kerne 1 aus dem Formwerkzeug 15 entnommen werden.

Die Volumenpartikel 2 bestehen aus den Werkstoffen expandierende Polypropylen (EPP), expandierende Polystyrol (EPS) oder einem expandierenden Polyethylen (EPE). Es ist ohne weiteres vorstellbar, diese Werkstoffe zu mischen und/oder eine entsprechende Anzahl von solchen Volumenpartikel 2 in den Zwischenraum 16 einzuführen. Dies bedeutet, dass aufgrund der gewählten Dichte der Volumenpartikel 2 in dem Zwischenraum 16 eine entsprechendes Eigengewicht des hergestellten Kernes 1 einstellbar ist. Darüber hinaus kann auch durch die Verteilung der Volumenpartikel 2 und deren Anzahl in dem Zwischenraum 16 die Formstabilität der gefertigten Kerne 1 beeinflusst sein.

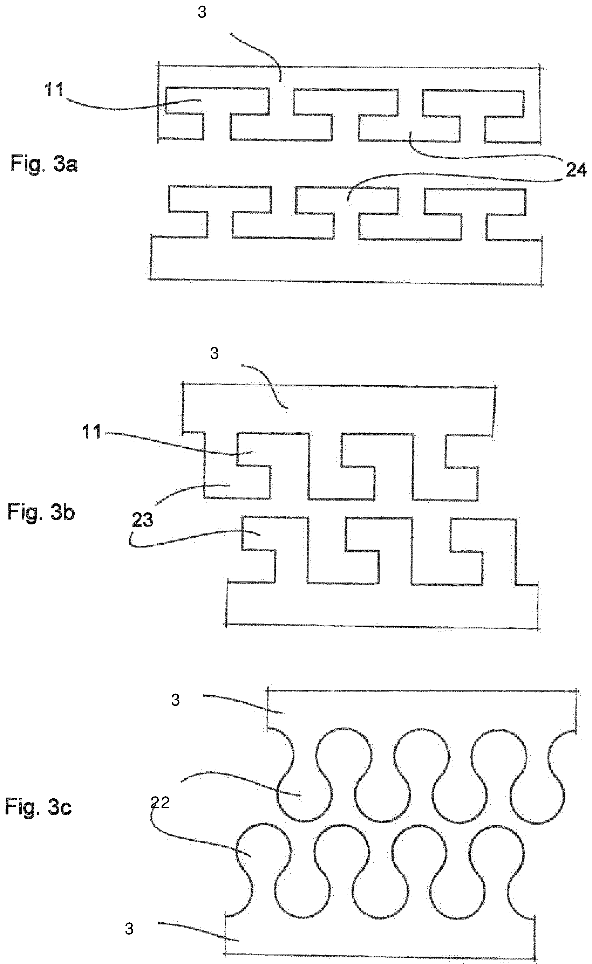

In den Figuren 3a, 3b und 3c sind weitere Ausgestaltungsformen der Hinterschneidungen 11 zu entnehmen. Die Hinterschneidungen 11 können dabei ein T-förmiges Profil 24 aufweisen gemäß Figur 3a, oder ein L-förmiges Profil und seitlich zueinander versetztes Profil 23 gemäß Figur 3b oder eine halbkugelförmiges Profil 22 gemäß Figur 3c, die beispielsweise bei Puzzleteilen bekannt ist. Es ist erforderlich, dass die unterschiedlichen Profile 21, 22, 23, 24 der Hinterschneidungen 11 miteinander korrespondieren, um ein Ineinandergreifen der die Hinterschneidungen 11 bildenden Profile 21, 22, 23, 24 zu ermöglichen.

Allen Profilen 21, 22, 23, 24 von Hinterschneidungen 11 ist gemeinsam, dass beim Ineinandergreifen der Hinterschneidungen 11 eine formschlüssige Wirkverbindung zwischen diesen entsteht, so dass zwei benachbarte Kerne 1 gemäß Figur 1b in x-und y-Richtung des Koordinatensystems 4 nicht mehr voneinander gelöst werden können, sondern vielmehr fest mit dieser Ebene verbunden sind. Lediglich in t-Richtung des Koordinatensystems 4 sind die Kerne 1 noch beweglich, um das Ineinandergreifen der Hinterschneidungen 11 zu erreichen.

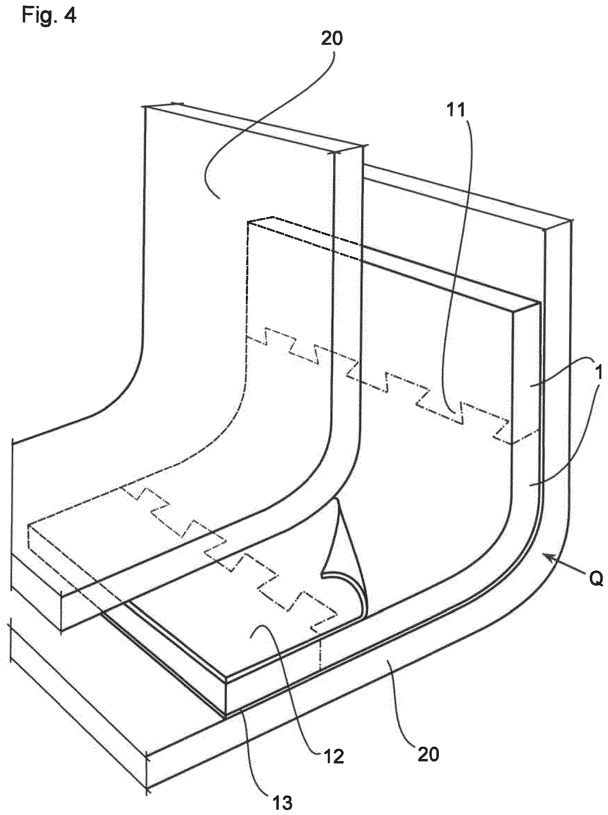

In Figur 4 ist ein möglicher Weiterverarbeitungsprozess der derart miteinander verbundenen Kerne 1 zu entnehmen. Die Kerne 1 werden nämlich, nachdem diese über die Hinterschneidungen 11 miteinander fixiert sind in eine Maschine eingeführt, deren Formwerkzeuge 20 zweiteilig ausgestaltet sind. Zumindest eines der Formwerkzeuge 20 ist beheizt, so dass die dort vorhandenen Kerne 1 aufgeweicht biegbar sind, wodurch diese in eine dreidimensionale Kontur überführt werden können. Solche Gebilde können beispielsweise als Abdeckungen, Verschalungen, Sitze, Regale, Türen, Innen oder Außenverkleidungen verwendet werden und weisen eine Sandwich-Leichtbau-Ausführung auf.

Durch die Erwärmung - die schematisch mit dem Symbol Q dargestellt ist - der Kerne 1 mittels des Formwerkzeuges 20 ist auch erreicht, dass die schwalbenschwanzförmigen Profile 21 der Hinterschneidungen 11 miteinander verschmelzen, wodurch die benachbarten Kerne 1 als einschlägiges Bauteil weiterverarbeitbar sind.

Um die relativ weichen Werkstoffe EPP, EPS oder EPE zu versteifen, ist es erforderlich, eine oder zwei Deckschichten 12 bzw. 13 auf die jeweilige Oberfläche der bereits gebogenen Kerne 1 aufzulegen und die Deckschichten 12 und 13 mit den Oberfläche der Kerne 1 zu verschmelzen oder zu verkleben. Aufgrund der Erwärmung der Kerne 1 und der Deckschichten 12 und 13 mittels der Formwerkzeuge 20 entsteht im Übergangsbereich zwischen den Kernen 1 und den Deckschichten 12,13 ein gewisser Schmelzvorgang, durch den sich die aus unterschiedlichen Werkstoffen bestehenden Kerne 1 und Deckschichten 12 und 13 miteinander verbinden. Die Deckschichten 12 und 13 sind aus einem Glasfaserverbund oder einem thermoplastischen Werkstoff hergestellt.

Aufgrund der Struktur der Deckschichten 12 und 13 ist somit nach dem Weiterverarbeitungsprozess ein relativ hartes Gebilde entstanden, das eine erhebliche Belastung standhält.

Die Hinterschneidungen 11 können abgeschnitten sein, wenn diese aus dem gefertigten Gebilde überstehen sollten.

## Patentansprüche

1. Zwei- oder dreidimensional geformtes Gebilde, insbesondere eine Abdeckung, eine Verschalung, ein Sitz, ein Regal, eine Tür, eine Innen- oder Außenverkleidung,
die in Sandwich-Leichtbau-Ausführung aufgebaut ist, mit einem Kern als Rohling oder als Ausgangsprodukt für die Herstellung der Gebilde, der Kern besteht aus einer Vielzahl von den fertigen Kern (1) bildenden Volumenpartikeln (2), wobei vor Beginn des Weiterverarbeitungsprozesses an einer oder mehreren der Stirnseiten (3) des Kerns (1) eine oder mehrere Hinterschneidungen (11) in Form von geometrischen Profilen (21, 22, 23, 24) angeformt oder vorgesehen ist oder sind; die jeweilige Hinterschneidung (11) des ersten Kerns (1) mit einer Hinterschneidung (11) eines zweiten Kerns (1) derart korrespondieren oder ineinander greifen, dass die beiden Kerne (1) in x- und y-Richtung einer in der Ebene des Kerns (1) verlaufenden Koordinationssystems (4) formschlüssig arretiert sind; die den Kern (1) bildenden Volumenpartikel (3) aus den Werkstoffen expandierendes Polypropylen (EPP), expandierendes Polystyrol (EPS) oder expandierendes Polyethylen (EPE) bestehen; und der Kern (1) zur Verstärkung mit einer oder zwei Deckschichten (12, 13) versehen ist und die Deckschichten (12, 13) aus einem Thermoplast-Werkstoff oder Glasfaserverbund hergestellt ist, **dadurch gekennzeichnet, dass** die jeweiligen Deckschichten (12, 13) auf die Oberseite oder die Oberseiten des Kernes (1) mittels Erwärmung (Q) fixiert sind, dass die Deckschichten (12, 13) und der Kern (1) in ihrem jeweiligen Übergangsbereich miteinander verschmolzen oder verklebt sind und dass der Kern (1) und die Deckschichten (12, 13) ein Flächen-Gebilde zur weiteren Verwendung bilden, oder, dass der Kern (1) durch Erhitzen verformt und die Deckschichten (12, 13) nach dessen Umformung auf diesen aufgebracht sind und mit diesem ein dreidimensionales Gebilde bilden.

2. Gebilde nach Anspruch 1,
**dadurch gekennzeichnet,**
**dass** die Hinterschneidungen (11) von zwei benachbarten Kernen (1) miteinander verschmolzen sind.

3. Gebilde nach einem der vorgenannten Ansprüche,
**dadurch gekennzeichnet,**
**dass** zwei benachbarte Kerne (1) unterschiedliche Anteile von Volumenpartikeln (2) und/oder anderen Werkstoffen von Volumenpartikeln (2) aufweisen.

4. Gebilde nach einem der Ansprüche 1 oder 2, **dadurch gekennzeichnet,**
**dass** die geometrische Struktur der Hinterschneidungen (11) in Form von schwalbenschwanzförmigen Profilen (21), Halbkugelkopfartige Profile (22) oder als versetzt zueinander ausgerichtete L-Profile (23) oder als T-Profile (24) ausgestaltet sind.

5. Verfahren zur Herstellung eines zwei- oder dreidimensional geformten Gebildes nach einem der Ansprüche 1, 2 oder 4, wobei ein Kern als Rohling oder als Ausgangsprodukt in Leichtbau-Ausführung hergestellt und anschließend zu einem Sandwich-Gebilde weiterverarbeitbar ist, aufweisend die nachfolgende Verfahrensschritte:
- Bereitstellen eines Herstellungswerkzeuges (15) mit einem eine Innenkontur aufweisenden Zwischenraum (16), der an mindestens einer der Stirnseiten (3) eine Reihe von Hinterschneidungen (11) in Form von geometrischen Profilen (21, 22, 23, 24) aufweist,
- Einfüllen oder Einspritzen von Volumenpartikeln (2) in dem Zwischenraum (16) des Formwerkzeuges (11), die aus den Werkstoffen Polypropylen (EPP), expandierendem Polystyrol (EPS) oder expandierendes Polyethylen (EPE) bzw. einem Gemisch daraus bestehen,
- Erhitzen der Volumenpartikel (2) und/oder Einspritzen von Heißwasserdampf (5) in dem Zwischenraum (16), derart, dass die Volumenpartikel (2) ausgedehnt, aufgeweicht und miteinander verschmolzen oder verklebt sind,
- Entnehmen des ausgehärteten Kernes (1) aus dem Herstellungswerkzeug (15).

6. Verfahren nach Anspruch 5, **dadurch gekennzeichnet,**
**dass** zwei oder mehrere des hergestellten Kerns (1) mittels der miteinander korrespondierenden und ineinander eingreifenden Hinterschneidungen (11) in x- und y-Richtung eines in der Kernebene verlaufenden Koordinationssystems (4) formschlüssig miteinander arretiert sind.

7. Verfahren nach Anspruch 6,
**dadurch gekennzeichnet,**
**dass** die ineinander greifenden Hinterschneidungen (11) vor der Weiterverarbeitung der Kerne (1) miteinander verschmolzen sind.

## Claims

1. A two- or three-dimensionally shaped structure, in particular a cover, a casing, a seat, a shelf, a door, an interior or exterior cladding, which is constructed in a lightweight-sandwich design, comprising a core as a blank or a starting material for the manufacture of the structures, the core consisting of
a plurality of volume particles (2) forming the finished core (1), wherein
prior to the further processing process one or more undercuts (11) in the form of geometric profiles (21, 22, 23, 24) is or are moulded or provided to one or more of the front faces (3) of the core (1),
the respective undercut (11) of the first core (1) corresponds or engages with an undercut (11) of the second core (1) in such a way that both cores (1) are positively locked in a direction x and y of a coordinate system (4) extending in a plane of the core (1);
the volume particles (2) forming the core (1) consist of the materials expanded polypropylene (EPP), expanded polystyrene (EPS) or expanded polyethylene (EPE); and wherein
the core (1) is provided with one or two cover layers (12, 13) for reinforcement and the cover layers (12, 13) are made of a thermoplastic material or a fiberglass compound,
**characterised in that**
the respective cover layers (12, 13) are fixed to the upper side or the upper sides of the core (1) by means of warming (Q), that the cover layers (12, 13) and the core (1) are fused or glued with one another in their respective region of transition and that the core (1) and the cover layers (12, 13) form a surface structure for further use or that the core (1) deforms through heating and the cover layers (12, 13) are disposed thereon after its deformation and form a three-dimensional structure therewith.

2. The structure according to claim 1,
**characterised in that**
the undercuts (11) of two adjacent cores (1) are fused with one another.

3. The structure according to any of the preceding claims,
**characterised in that**
two adjacent cores (1) have different portions of volume particles (2) and/or other materials of volume particles (2).

4. The structure according to any of claims 1 or 2,
**characterised in that**
the geometric structures of the undercuts (11) are designed as dovetail-shaped profiles (21), semi-spherical type profiles (22) or as L-shaped profiles (23) oriented in manner offset to one another or as T-shaped profiles (24).

5. A method of manufacture of a two- or three-dimensionally shaped structure according to any of claims 1, 2 or 4, wherein a core as a blank or a starting material is produced as a lightweight construction and subsequently can be further processed into a sandwich-structure, comprising the following procedural steps:
- providing a manufacturing tool (15) that has an interspace (16) with an inner contour having a series of undercuts (11) in the form of geometric profiles (21, 22, 23, 24) provided on at least one of the front faces (3),
- filling in or injecting volume particles (2) into the interspace (16) of the moulding tool (15) consisting of the materials polypropylene (EPP), expanded polystyrene (EPS) or expanded polyethylene (EPE) or a mixture thereof,
- heating the volume particles (2) and/or injecting hot water vapor (5) in the interspace (16) in such a manner that the volume particles (2) are expanded, softened and fused or glued with one another,
- removing the cured core (1) from the manufacturing tool (15).

6. The method according to claim 5,
**characterised in that**
two or more of the produced cores (1) are positively locked with one another in a direction x and y of a coordinate system (4) extending in the plane of the core by means of the undercuts (11), which correspond with each other and are engaged with one another.

7. The method according to claim 6,
**characterised in that**
the undercuts (11) that are engaged with one another are fused with one another prior to the further processing of the cores (1).

## Revendications

1. Structure bi- ou tridimensionnelle, en particulier un recouvrement, revêtement, un siège, un rayon, une porte, ou un enrobage intérieur ou extérieur en construction sandwich allégée, possédant un noyau en tant qu'ébauche ou en tant que forme de départ pour la réalisation des structures, le noyau étant constitué d'une multitude de particules volumiques (2) formant le noyau défini (1),
où,
avant le traitement ultérieur, il est formé ou prévu sur une ou sur plusieurs faces frontales (3) du noyau (1) une ou plusieurs contre-dépouilles (11) sous la forme de profils géométriques (21, 22, 23, 24) ;
la contre-dépouille respective (11) du premier noyau (1) correspond à ou s'engrène dans une contre-dépouille (11) du deuxième noyau (1) de sorte que les deux noyaux (1) sont connectés par la forme en directions x et y d'un système de coordonnées (4) s'étendant dans le plan du noyau (1) ;
les particules volumiques (2) formant le noyau (1) consistent en polypropylène se détendant (EPP), en polystyrol se détendant (EPS) ou en polyéthylène se détendant (EPE) ; et où
en vue du renforcement, le noyau (1) est muni d'une ou de deux couches de recouvrement (12, 13) réalisées en un matériau thermoplastique ou en composé à fibres de verre,
**caractérisé en ce que**
les couches de recouvrement respectives (12, 13) sont fixées par réchauffement (Q) sur la face supérieure ou sur les faces supérieures du noyau (1), qu'au niveau de leurs sections de transition respectives, les couches de recouvrement (12, 13) et le noyau (1) sont fondus ou collés ensemble, et que le noyau (1) et les couches de recouvrement (12, 13) forment une structure à surface étendue servant au traitement ultérieur ou que le noyau (1) est transformé par réchauffement et que suite à sa transformation, les couches de recouvrement (12, 13) sont appliquées sur celui-ci pour former ensemble une structure tridimensionnelle.

2. Structure d'après la revendication 1,
**caractérisée en ce que**
les contre-dépouilles (11) de deux noyaux voisins (1) sont fondues ensemble.

3. Structure d'après une des revendications précédentes,
**caractérisée en ce que**
deux noyaux voisins (1) possèdent des pourcentages différents de particules volumiques (2) et/ou d'autres matériaux de particules volumiques (2).

4. Structure d'après une des revendications 1 ou 2,
**caractérisée en ce que**
les structures géométriques des contre-dépouilles (11) sont conçues sous la forme de profils en queue d'aronde (21), de profils en demi-sphères (22) ou en profils en L (23) décalés et alignés l'un sur l'autre, ou en profil en T (24).

5. Procédé de réalisation d'une structure bi- ou tridimensionnelle d'après une des revendications 1, 2 ou 4, le noyau étant réalisé en construction allégée et se laissant traiter ensuite pour former un sandwich, **caractérisé par** les démarches suivantes :
- Mise à disposition d'un outil de fabrication (15) avec un espace intermédiaire (16) possédant un contour intérieur qui, sur au moins une des faces frontales (3), possède une série de contre-dépouilles (11) sous la forme de profils géométriques (21, 23, 23, 24),
- Remplissage ou injection dans l'espace intermédiaire (16) de l'outil de fabrication (15), de particules volumiques (2) consistant en polypropylène se détendant (EPP), en polystyrol se détendant (EPS) ou en polyéthylène se détendant (EPE), ou en un mélange entre ceux-ci,
- Réchauffement des particules volumiques (2) et/ou injection de vapeur d'eau chaude dans l'espace intermédiaire (16) de sorte que les particules volumiques (2) sont détendues, amollies, fondues ou collées ensemble,
- Prélèvement du noyau durci (1) de l'outil de fabrication (15).

6. Procédé d'après la revendication 5,
**caractérisé en ce que**
deux ou plusieurs des noyaux (1) réalisés sont connectés par la forme à l'aide des contre-dépouilles (11) correspondants ou s'engrenant l'une dans l'autre en directions x et y d'un système de coordonnées (4) s'étendant dans le plan du noyau.

7. Procédé d'après la revendication 6,
**caractérisé en ce que**
les contre-dépouilles (11) s'engrenant l'une dans l'autre sont fondues ensemble avant le traitement ultérieur des noyaux (1).
